Europäisches Patentamt

European Patent Office

Office européen des brevets

(19)

(11) Veröffentlichungsnummer : **0 081 089**
**B1**

(12) **EUROPÄISCHE PATENTSCHRIFT**

(45) Veröffentlichungstag der Patentschrift :
**12.02.86**

(21) Anmeldenummer : **82110249.8**

(22) Anmeldetag : **06.11.82**

(51) Int. Cl.⁴ : **H 01 H 43/06**

(54) Programmierbare Steuereinrichtung, insbesondere für schaltende Zeitmessgeräte.

(30) Priorität : **09.12.81 DE 3148702**

(43) Veröffentlichungstag der Anmeldung :
**15.06.83 Patentblatt 83/24**

(45) Bekanntmachung des Hinweises auf die Patenterteilung : **12.02.86 Patentblatt 86/07**

(84) Benannte Vertragsstaaten :
**CH FR GB IT LI SE**

(56) Entgegenhaltungen :
**CH-A-  358 609**
**CH-A-  434 365**
**DE-A- 2 938 851**
**US-A- 2 690 800**
**US-A- 3 496 788**

(73) Patentinhaber : **DIETER GRÄSSLIN Feinwerktechnik**
**Bundesstrasse 36**
**D-7742 St. Georgen (DE)**

(72) Erfinder : **Thoma, Friedrich Xaver, Dipl.-Ing.(FH)**
**Leimengrubweg 12**
**D-7612 Haslach i.K. (DE)**

(74) Vertreter : **Thoma, Friedrich Xaver, Dipl.-Ing.**
**Leimengrubweg 12**
**D-7612 Haslach i.K. (DE)**

## Beschreibung

Die Erfindung betrifft eine Steuereinrichtung mit einem Programmtraeger mit den Merkmalen nach dem ersten Teil des Patentanspruchs 1.

Aus der US-A-2 690 800 ist ein elektromechanischer Zeitschalter bekannt, der mit einem Programmtraeger in Form einer rotierenden Schaltscheibe versehen ist, an deren Umfang mit ihr einstueckig ausgebildete lamellenfoermige Schaltfinger vorgesehen sind, die mittels einer dauermagneterzeugten Haltekraft in ihrer jeweiligen schaltprogrammkonformen Lage fixiert sind. Die einzelnen Schaltfinger, die schaltprogrammkonform eine elektrische Kontaktvorrichtung beaufschlagen, sind relativ breit ausgebildet. Ausserdem befindet sich zwischen den einzelnen Schaltfingern ein relativ grosser Luftspalt. Die relativ grosse Schaltfingerbreite und der relativ grosse Luftspalt zwischen den Schaltfingern gestatten es nicht, bei ueblichen Schaltscheibendurchmessern von ca. 60 mm, ein zeitlich relativ hoch aufgeloestes Schaltprogramm zu erzielen.

Dies gilt auch fuer die aus der CH-A-434 365 und der US-A-3 496 788 bekanntgewordenen, vergleichbaren mechanischen Programmtraeger. Die CH-A-434 365 zeigt einen Speicher fuer duale, mechanisch abfragbare Informationen, bei dem die programmierbaren Schaltfinger auf einem umlaufenden rad- oder kettenfoermigen Traeger angeordnet sind und gemaess einer der dort erwaehnten Ausfuehrungsmoeglichkeiten zur Fixierung der Lage der Schaltfinger in ihrer jeweiligen Programmlage von dauermagnetisch erzeugten Kraeften festgehalten werden. Derselbe Aufbau und dieselbe Funktionsweise liegt auch der mechanischen Speicherscheibe der US-A-3 496 788 zugrunde.

Aufgabe der vorliegenden Erfindung ist es, eine Steuereinrichtung der im ersten Teil des Patentanspruches 1 genannten Art zu schaffen, die es ermoeglicht, besonders kleine Abstufungen der Steuerzeiten zueinander zu programmieren, die zuverlaessig arbeitet, einfach in der Bedienung ist und rationell und wirtschaftlich hergestellt und montiert werden kann.

Diese Aufgabe wird durch die Merkmale im kennzeichnenden Teil des Patentanspruchs 1 geloest.

In den abhaengigen Anspruechen sind weitere Ausbildungen und Einzelheiten beansprucht.

Anhand der Ausfuehrungsbeispiele in der Zeichnung wird die Erfindung dargestellt und im folgenden naeher erlaeutert. Es zeigen

Figur 1 eine Draufsicht auf einen Programmtraegerausschnitt mit drahtfoermigen Steuerfingern im Luftspalt zweier zueinander benachbarter Jochstuecke und

Figur 2 eine Draufsicht auf eine Schaltuhr mit einer stationaer angeordneten Steuereinrichtung und einer umlaufenden Auswerteinrichtung fuer die Stellung der Steuerfinger.

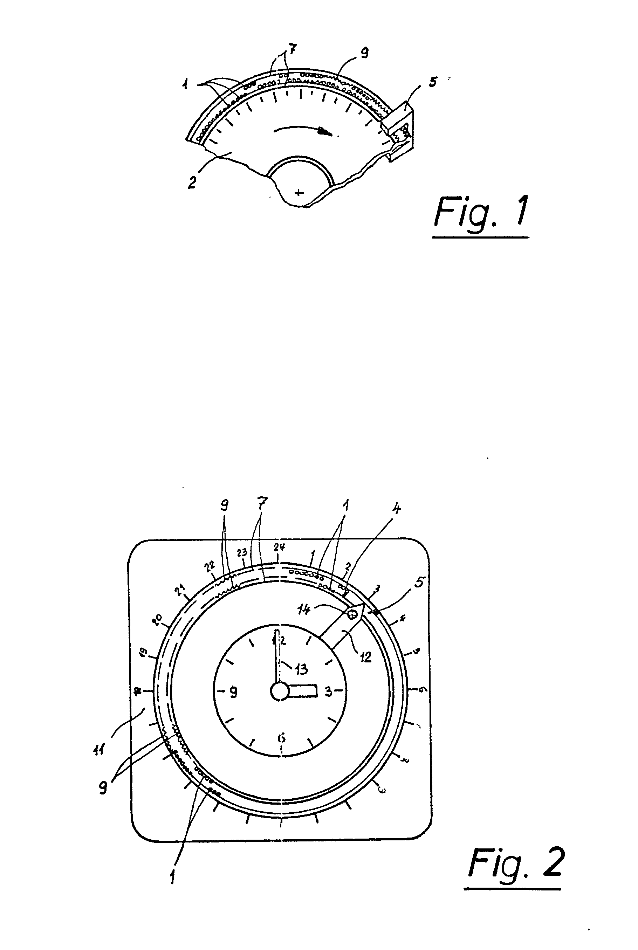

Gemaess Fig. 1 bestehen die Steuerfinger 1, die am Umfang des Programmtraegers angeordnet sind aus Draehten mit einem kreisfoermigen Querschnitt. Sie sind eng benachbart mit geringem Spielraum zueinander angeordnet und koennen entweder an dem der Achse des Programmtraegers 2 naeheren oder ferneren Anschlagrand des Jochstueckes 7 anliegen, wobei sie mindestens in einer dieser Lagen von einer dauermagneterzeugten Kraft gehalten werden und zu dieser in die jeweils andere Lage, beispielsweise manuell, verstellt werden koennen. Der Programmtraeger mit den Steuerfingern ist als umlaufende Steuerscheibe ausgebildet. Da die drahtfoermigen Steuerfinger 1 einen relativ kleinen Durchmesser aufweisen koennen, der in der Groessenordnung von nur 0,1 mm liegen kann, wird eine sehr kleine Abstufung der programmierbaren Steuerzeiten ermoeglicht. 5 bezeichnet eine Auswerteinrichtung (5) fuer die Stellung der Steuerfinger. Am inneren Umfang der Jochstuecke 7 des Programmtraegers 2 koennen zur genauen Positionierung der Steuerfinger 1 feinstufige Verzahnungen 9 vorgesehen sein, die jedoch auch entfallen koennen.

In der Fig. 2 ist eine Anwendung einer derartigen Steuereinrichtung in einer Schaltuhr sichtbar. Der Programmtraeger mit den Schaltfingern 1 ist in diesem Beispiel feststehend und die zeigerartig ausgebildete Auswerteinrichtung, fuer die Stellung der Steuerfinger 1 ist umlaufend angeordnet. Die Jochstuecke 7 sind zur Lagebestimmung der Steuerfinger 1 wiederum mit Verzahnungen 9 versehen. 11 bezeichnet ein Zifferblatt. Die Auswerteinrichtung 5 kann dort die Steuerfinger 1 optoelektronisch oder induktiv abtasten. Die Abtastung kann kontinuierlich umlaufend oder schrittweise umlaufend erfolgen.

Die Ausfuehrung nach Fig. 2 gewaehrleistet durch die stationaere Anordnung der Steuerfinger 1 ein klares Ablesen des Schaltprogramms. Der Zeiger 12, in welchen die Auswerteinrichtung 5 integriert ist, kann zwoelf- oder vierundzwanzigstuendig anzeigen. Ausserdem ist ein Minutenzeiger 13 vorgesehen. Bei einem optoelektronischen Betrieb der Schalt- oder Steueranordnung 5 im Zeiger 12 kann die Lichtquelle 14 vorderseitig am Zeiger 12 sichtbar sein und sowohl den Betriebszustand der Einrichtung als auch die jeweilige Lage des Zeigers 12 signalisieren. Statt des Zeigers 12 kann auch eine Scheibe eingesetzt werden. Der Zeiger 12 oder eine entsprechende Scheibe koennen lichtleitende Eigenschaften aufweisen. In diesem Falle kann die Lichtquelle 14 stationaer angeordnet sein.

## Patentansprueche

1. Steuereinrichtung mit einem in Aufsicht kreisscheibenfoermigen Programmtraeger (2), zum Einsatz in elektrischen Schaltanordnungen und insbesondere in schaltenden Zeitmessgeraeten, mit am Umfang des Programmtraegers (2) angeordneten, ferromagnetischen Steuerfingern (1), die jeweils einzeln oder zu mehreren eine von zwei definierten Lagen einnehmen koennen, wobei sie durch entsprechende Ausbildung des Programmtraegers in mindestens einer dieser Lagen von einer dauermagneterzeugten Kraft gehalten werden und aus dieser in die jeweils andere Lage, beispielsweise mechanisch, verstellt werden koennen, dadurch gekennzeichnet, dass die Steuerfinger (1) drahtfoermig ausgebildet sind und parallel zur Achse des Programmtraegers (2) verlaufend- mit geringem gegenseitigen Spielraum eng nebeneinander angeordnet sind.

2. Steuereinrichtung nach Anspruch 1, dadurch gekennzeichnet, dass der Querschnitt der Steuerfinger (1) kreisfoermig ist.

3. Steuereinrichtung nach einem der Ansprueche 1 oder 2, dadurch gekennzeichnet, dass der Durchmesser der Steuerfinger (1) 0,1 mm ist.

4. Steuereinrichtung nach einem der Ansprueche 1 bis 3, dadurch gekennzeichnet, dass der Programmtraeger (2) an seinem Aussenumfang zwei koaxial verlaufende Jochstuecke (7) besitzt, die zwischen sich einen ringspaltfoermigen Zwischenraum bilden, in den die Steuerfinger (1) hineinragen, und dass zur genauen Lagebestimmung der Steuerfinger (1) an den einander gegenueberliegenden Flaechen der Jochstuecke (7) je eine feinstufige Verzahnung (9) vorgesehen ist.

## Claims

1. A control device having a programme carrier (2) which in plan view is disc-shaped, for use in electrical switching arrangements and in particular in time-measuring switching devices, and having ferro-magnetic control fingers (1) which are arranged on the periphery of the programme carrier (2) and which can in each case occupy one of two defined positions individually or as a group, where as a result of a corresponding design of the programme carrier, said control fingers can be retained in at least one of the positions, by a force produced by a permanent magnet and can be, for example mechanically, moved from this position into the respective other position, characterised in that the control fingers (1) are wireshaped and are so arranged as to be close beside one another with a negligible mutual clearance, and to extend parallel to the axis of the programme carrier (2).

2. A control device as claimed in Claim 1, characterised in that the cross-section of the control fingers (1) is circular.

3. A control device as claimed in one of Claims 1 and 2, characterised in that the diameter of the control fingers (1) is 0.1 mm.

4. A control device as claimed in one of Claims 1 to 3, characterised in that on its outer periphery, the programme carrier (2) has two coaxially extending yoke pieces (7) which form between them an interspace which has the shape of an annular slot into which the control fingers (1) protrude ; and that, in order accurately to determine the position of the control fingers (1), a finely-stepped tooth construction is in each case arranged on the surfaces of the yoke pieces (7) which are arranged opposite to one another.

## Revendications

1. Dispositif de commande à support de programme (2) présentant vu de dessus la forme d'un disque circulaire, destiné à être monté dans des installations électriques de commutation et en particulier dans des appareils commutateurs de temporisation, comportant des index de commande (1) ferromagnétiques, disposés sur la périphérie du support de programme (2) et pouvant prendre respectivement individuellement ou à plusieurs l'une des deux positions définies, lesdits index pouvant être maintenus grâce à une conformation correspondante du support de programme dans au moins l'une de ses positions par une force engendrée par un aimant permanent et pouvant être déplacés, par exemple mécaniquement, à partir de cette position dans l'autre position respective, caractérisé par le fait que les index de commande (1) sont agencés en forme de fils et sont disposés, en s'étendant parallèlement à l'axe du support de programme (2), étroitement rapprochés les uns des autres avec un faible jeu mutuel.

2. Dispositif de commande selon la revendication 1, caractérisé par le fait que la section transversale des index de commande (1) est de forme circulaire.

3. Dispositif de commande selon la revendication 1 ou 2, caractérisé par le fait que le diamètre des index de commande (1) est de 0,1 mm.

4. Dispositif de commande selon l'une quelconque des revendications 1 à 3, caractérisé par le fait que le support de programme (2) possède sur sa périphérie extérieure deux colliers (7) s'étendant coaxialement qui constituent entre eux un interstice en forme de fente annulaire dans lequel viennent s'insérer les index de commande (1) et que, pour la détermination de position exacte des index de commande (1), il est prévu sur les faces des colliers (7) mutuellement en regard, une denture (9) à pas de précision.

Fig. 1

Fig. 2